# EUROPEAN PATENT APPLICATION

(11) **EP 2 871 601 A1**
(43) Date of publication of application: **13.05.2015**
(21) Application number: 14191785.6
(22) Date of filing: 05.11.2014
(51) Int. Cl.: G06Q 10/06

(54) **Manufacture instruction data management server and manufacture instruction data management program**

(30) Priority: 06.11.2013 JP 2013230513
(71) Applicant: IPS Co., Ltd., Osaka 530-0011 (JP)
(72) Inventor: Akita, Toshifumi, Osaka-shi, Osaka 530-0011 (JP)
(74) Representative: Grünecker Patent- und Rechtsanwälte PartG mbB

(57) **Abstract**

A manufacture instruction data management server includes a manufacture instruction data DB storing manufacture instruction data, supplies a narrowing condition designation screen for designating narrowing conditions in accordance with a request from a user terminal, receives narrowing conditions designated on the narrowing condition designation screen from the user terminal, creates a production table screen corresponding to the narrowing conditions as narrowing result data, and supplies the created narrowing result data to the user terminal as narrowing results. The production table screen contains an element display area where a designated time range, and allotment destination information corresponding to the designated allotment destination item are displayed as elements of a table, and contains a mesh data display area where mesh data containing article detail information about an article item is displayed in a section for corresponding elements for each manufacture instruction data.

## Description

### BACKGROUND

### Technical Field

The present invention relates to a manufacture instruction data management server which is a server for operation of ERP, and supplies manufacture instruction data produced in a business process to a user terminal via a communication network in accordance with a request from the user terminal used by a user, and further relates to a manufacture instruction data management program under which the manufacture instruction data management server performs functions.

### Related Art

Package software called ERP (Enterprise Resource Planning) has been the mainstream software used for building core business systems in enterprises. An increasing number of these core business systems containing ERP (enterprise resource planning systems, or ERP systems) are built on relational databases. The principal objectives of application programs designed for the systems are often focused on business processing, wherefore the systems are generally used with no primary attention given to output reports.

Under these circumstances, various data warehouse systems offering complementary functions for the core business systems have been proposed for the purpose of processing a large volume of reports at high speed, and outputting the reports in accordance with a request from a user (for example, see JP 2002-312208 A).

### SUMMARY

These systems manage various types of manufacture instructions, and manage lots of manufacture instruction data. In this case, the volume of data to be outputted inevitably becomes enormous, wherefore the amount of processes required for outputting the data increases. Accordingly, in case of the foregoing systems, an improved technique for outputting data has been demanded rather than simple output of a list of extracted data. More specifically, such a system has been demanded which can provide desired data for a user by executing only simplified processing without requiring complicated selection operation.

The present invention solves the aforementioned problems by providing a technology which can provide desired data for a user by executing only simplified processing without requiring complicated selection operation.

A manufacture instruction data management server according to the present invention, which is a server for operation of ERP, and supplies manufacture instruction data produced in a business process to a user terminal via a communication network in accordance with a request issued from the user terminal used by a user, includes: a manufacture instruction data storing unit storing manufacture instruction data containing allotment destination information indicating a destination of allotment of instructions, and article detail information indicating details of an article to be manufactured; a narrowing condition designation screen supplying unit supplying a narrowing condition designation screen for designating a time range, an allotment destination item indicating an item of the allotment destination information, and an article item indicating an item of the article detail information as narrowing conditions in accordance with a request from the user terminal; a narrowing result data creating unit receiving narrowing conditions designated on the narrowing condition designation screen from the user terminal, and creating a production table screen corresponding to the narrowing conditions as narrowing result data; and a narrowing result supplying unit supplying the narrowing result data created by the narrowing result data creating unit to the user terminal as narrowing results. The production table screen contains an element display area where a designated time range, and allotment destination information corresponding to the designated allotment destination item are displayed as elements of a table, and contains a mesh data display area where mesh data containing the article detail information about the article item is displayed in a section for corresponding elements for each manufacture instruction data.

This constitution allows output of desired data to the user only by simplified processing without requiring complicated selection operation in the business system (ERP system) for providing information on reports.

The narrowing condition designation screen may be configured to contain an area for selecting the time range, an area for selecting the allotment destination item, and an area for selecting the article item.

The production table screen may be configured to contain an additional change area for selecting execution of either new addition of the manufacture instruction data or contents change of the manufacture instruction data. The manufacture instruction data management server may be configured to transmit additional change screen information displaying a list of the manufacture instruction data to the user terminal in accordance with a request from the user terminal having determined selection in the additional change area, receive contents of input operation of either new addition of the manufacture instruction data or contents change of the manufacture instruction data from the user terminal displaying an additional change screen based on the additional change screen information, and update the manufacture instruction data in accordance with the received contents of input operation.

The allotment destination item may be configured to contain at least any one of a business process, a project, and a step. The article item may be configured to contain at least either an article name or an amount of production.

A manufacture instruction data management program according to the present invention allows operation of ERP, and allows a manufacture instruction data management server to supply manufacture instruction data produced in a business process to a user terminal via a communication network in accordance with a request issued from the user terminal used by a user. Under the manufacture instruction data management program, the manufacture instruction data management server including a manufacture instruction data storing unit which stores manufacture instruction data containing allotment destination information indicating a destination of allotment of instructions, and article detail information indicating details of an article to be manufactured executes: a narrowing condition designation screen supplying process supplying a narrowing condition designation screen for designating a time range, an allotment destination item indicating an item of the allotment destination information, and an article item indicating an item of the article detail information as narrowing conditions in accordance with a request from the user terminal; a narrowing result data creating process receiving narrowing conditions designated on the narrowing condition designation screen from the user terminal, and creating a production table screen corresponding to the narrowing conditions as narrowing result data, wherein the production table screen contains an element display area where a designated time range, and allotment destination information corresponding to the designated allotment destination item are displayed as elements of a table, and contains a mesh data display area where mesh data containing the article detail information about the article item is displayed in a section for corresponding elements for each manufacture instruction data; and a narrowing result supplying process supplying the narrowing result data created in the narrowing result data creating process to the user terminal as narrowing results.

According to the present invention, output of data desired by a user is allowed by execution of only simplified processing without the necessity of complicated selection operation in a business system providing information on reports.

### BRIEF DESCRIPTION OF DRAWINGS

FIG. 1 is a block diagram illustrating a constitution example of a manufacture instruction data management system;
FIG. 2 is a block diagram illustrating a constitution example of the manufacture instruction data management system;
FIG. 3 is a figure illustrating a constitution example of manufacture instruction data;
FIG. 4 is a flowchart showing an example of a production table supplying process;
FIG. 5 is a figure illustrating a constitution example of a narrowing condition designation screen;
FIG. 6 is a flowchart showing an example of a narrowing condition receiving process;
FIG. 7 is a figure illustrating a constitution example of the narrowing condition designation screen;
FIG. 8 is a figure illustrating a constitution example of a production table screen;
FIG. 9 is a flowchart showing an example of an additional change process; and
FIG. 10 is a figure illustrating a constitution example of a manufacture instruction list display screen.

### DETAILED DESCRIPTION

An embodiment according to the present invention is hereinafter described with reference to the drawings.

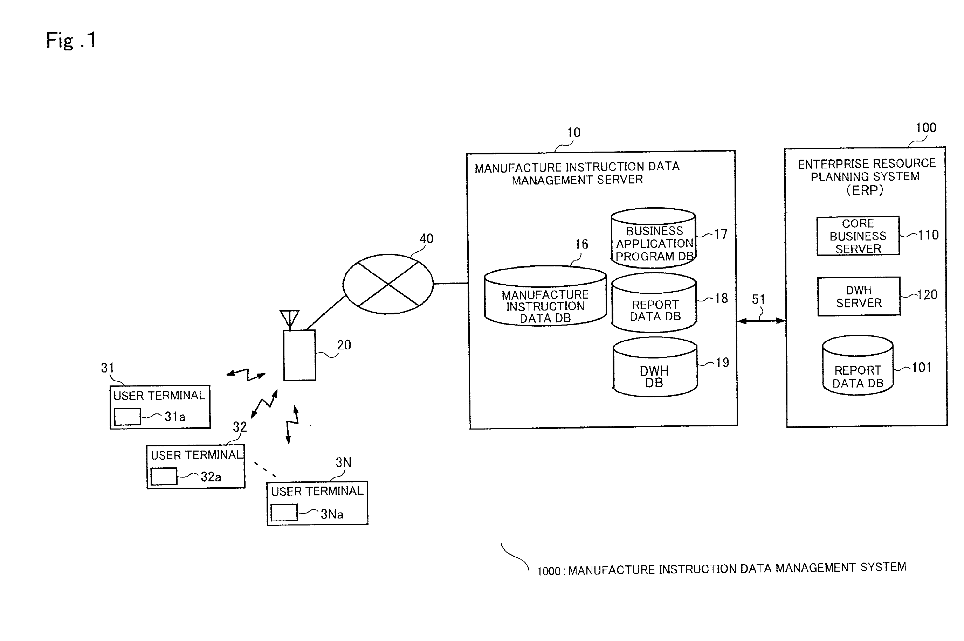

FIG. 1 is a block diagram illustrating a constitution example of a manufacture instruction data management system 1000 according to the embodiment of the present invention. As illustrated in FIG. 1, the manufacture instruction data management system 1000 includes a manufacture instruction data management server 10, a relay 20, a plurality of user terminals 31 through 3N (N: arbitrary positive integer), and an enterprise resource planning system 100.

The manufacture instruction data management server 10 is connected with each of the user terminals 31 through 3N via a communication network 40 such as the Internet, and the relay 20. The manufacture instruction data management server 10 is connected with the enterprise resource planning system 100 via a communication network 51 such as a LAN (Local Area Network) and a dedicated communication line. The user terminals may be configured to be either communicable with each other via the manufacture instruction data management server 10, or incommunicable with each other.

The enterprise resource planning system 100 includes a core business server 110, a data warehouse server (DWH server) 120, and a voucher data DB (Database) 101.

The enterprise resource planning system 100 performs functions as an enterprise resource planning system by communicating with (transmitting and receiving various types of information to and from) the manufacture instruction data management server 10. Known technologies are applied to the core business server 110 and others included in the enterprise resource planning system 100.

It is assumed that the core business server 110 and the DWH server 120 are connected with each other via a dedicated communication line.

The core business server 110 is a server managed by a manager of the manufacture instruction data management system 1000, for example, and performs various types of functions for managing report information concerning various types of business affairs (such as creation, update, and saving of information). The core business server 110 is constituted by an ordinary information processing device equipped with an OS (Operating System) and a relational DB.

The term "report" in this context is a general term referring to books, vouchers and the like. Books herein are materials where items concerning receipts and disbursements of money and articles are entered, while vouchers herein are data based on which books are created, and are evidences for business transactions or the like. Discussed in this embodiment is an example in which the core business server 110 handles only voucher data as report data.

The core business server 110 executes various types of processes under a business application program. Examples of the business application program herein include a sales task management program, a purchase task management program, a production management program, a financial accounting management program, and a managerial accounting management program.

The DWH server 120 is a server managed by a system manager of this system, for example, and performs various types of functions for realizing a data warehouse. The data warehouse in this context refers to a system which analyzes relevance between respective items in business data such as report data accumulated in the time-series order. The DWH server 120 has a function of converting files in CSV (Comma Separated Values) format transferred from the core business server 110 into data in a predetermined data format, for example, and registering respective types of the converted data in predetermined storing areas. The DWH server 120 may be configured to extract data corresponding to respective storing areas from data in the state of CSV format without converting data format.

The report data DB 101 is a storage medium which stores various types of report data collected, sorted, or processed in other ways by various types of information processing under various types of business application programs (programs stored in a not-shown business application program DB included in the enterprise resource planning system 100). For example, voucher data corresponding to order acceptance slips in the report data DB 101 is associated with order acceptance slip header information, order acceptance slip detailed information, delivery date schedule and the like, and stored in a structure searchable based on keys such as slip numbers.

The core business server 110 has a function of converting various types of data stored in the report data DB 101 (particularly manufacture instruction data) into data in CSV format in accordance with predetermined extraction conditions, and transmitting the converted data to the manufacture instruction data management server 10. According to this embodiment, the core business server 110 transfers data files converted into CSV format using FTP (File Transfer Protocol) to the manufacture instruction data management server 10.

The manufacture instruction data management server 10 is a server for operation of ERP, and supplies various types of data via a communication network in accordance with requests from the user terminals 31 through 3N used by users. The manufacture instruction data management server 10 is constituted by an information processing device such as a WWW server, and managed by the system manager of the manufacture instruction data management system 1000.

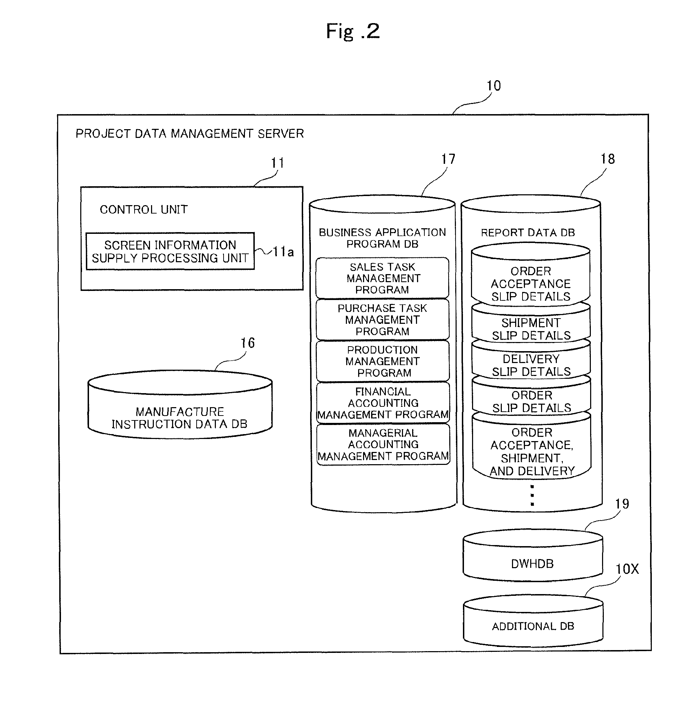

FIG. 2 is a block diagram illustrating a constitution example of the manufacture instruction data management server 10. As illustrated in FIG. 2, the manufacture instruction data management server 10 includes a control unit 11 performing various types of controls, a manufacture instruction data DB 16, a business application program DB 17, a report data DB 18, a DWH DB 19, and an additional DB 10X storing various types of data necessary for performing functions as an ordinary core business server (such as data used by various types of programs stored in the business application program DB 17). The additional DB 10X is a part not relating to the present invention, wherefore detailed explanation thereof is omitted herein. The control unit 11 includes a screen information supply processing unit 11a which executes processes such as a process for supplying various types of screen information (for example, narrowing designation screen information and production table screen information) to the user terminals 31 through 3N.

The manufacture instruction data DB 16 is a storage medium storing manufacture instruction data produced in a business process.

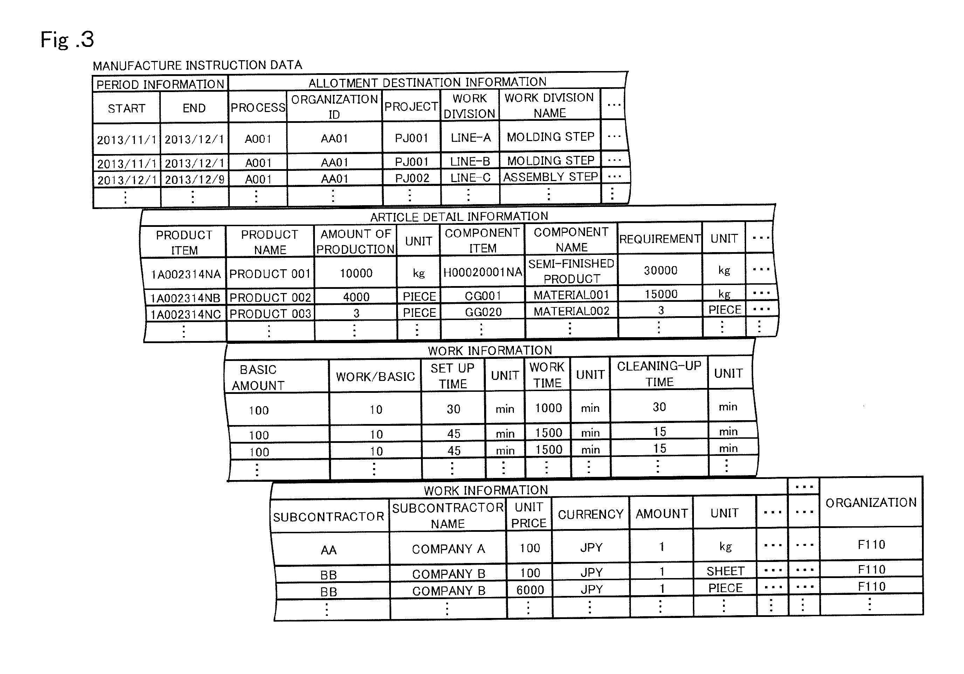

FIG. 3 is a figure illustrating a constitution example of manufacture instruction data stored in the manufacture instruction data DB 16. As illustrated in FIG. 3, the manufacture instruction data contains at least period information, allotment destination information, article detail information, and work information.

The period information contains a start time and an end time, and a corresponding date is stored for each of the times. According to this embodiment, only information concerning a start time and an end time is stored as the period information. However, the period information may define the period in accordance with manufacture phases, or may define only an end time.

The allotment destination information is information defining allotment destinations. More specifically, the allotment destination information is information indicating allotment destinations of processes, projects, and work divisions (including names of work divisions, hereinafter referred to as steps depending on cases) allotted as items corresponding to items received as designations on a narrowing condition designation screen 500 (described later). The processes indicate types of business processes, more specifically, business processes containing various types of processes such as "speculative production", "build-to-order manufacturing", and "project delivery". The work divisions indicate manufacture lines, and are associated with work division names such as "molding step" and "assembly step".

The article detail information is information defining detailed information about articles to be produced for each item. As illustrated in FIG. 3, the article detail information contains product item, product name, amount of production, unit of amount of production, component item, component name, requirement, and unit of requirement as items corresponding to items to be designated on the narrowing condition designation screen. Mesh data displayed in the production table is presented based on data corresponding to items designated by the user. The mesh data may be configured to present items associated with items not designated by the user in addition to items associated with the items designated by the user. More specifically, the system 1000 according to this embodiment may be configured to display the amount of production of the corresponding product item as well when a certain product name is selected as a target item.

The work information indicates data specifying time required for work, cost, subcontractor and the like.

The business application program DB 17 is a storage medium storing programs used for various types of business affairs. Examples of the programs stored in the business application program DB 17 include a sales task management program, a purchase task management program, a production management program, a financial accounting management program, and a managerial accounting management program.

The report data DB 18 is a storage medium storing various types of report data collected, sorted, or processed in other ways by various types of information processing under various types of business application programs stored in the business application program DB 17. According to this embodiment, the report data DB 18 is a database which stores voucher data transferred from the core business server 110 in a predetermined format, and is constituted by a plurality of cubes.

Each of the cubes stores report data concerning contents of the corresponding business affair produced in a business process under the corresponding business application program. More specifically, each of the cubes stores report data concerning contents of the corresponding business affair such as order acceptance slip details, shipment slip details, delivery slip details, and order slip details.

Such a cube may be equipped which stores report data concerning contents of each associated business affair indicating contents of predetermined associated business affairs crossing a plurality of business units as unified contents. More specifically, such a cube may be equipped which stores report data indicating contents of predetermined associated business affairs such as order acceptance, shipment, and delivery (business affairs associated with order acceptance, shipment, and delivery) as unified contents, for example.

Accordingly, each of the cubes stores report data concerning contents of the corresponding business affair produced in a business process, report data concerning contents of the corresponding associated business affair indicating contents of predetermined associated business affairs crossing a plurality of business units as unified contents, and other report data in the corresponding classifications classified according to contents of business affairs.

According to this embodiment, the manufacture instruction data is stored in the manufacture instruction data DB 16. However, the manufacture instruction data may be configured to be contained within one cube.

Each of the cubes stores data constituted by items generally contained in the corresponding report data (The items include order acceptance slip header information, order acceptance slip detail information, delivery date schedule for voucher data corresponding to order acceptance slip, for example. The items are stored in such a structure that respective items are searchably associated based on keys such as slip numbers. Slip numbers include order acceptance number, order number, shipment number, in-and-out store number, invoice inquiry, bill number, account number, and others).

The manufacture instruction data management server 10 has a function of supplying various types of data stored in the report data DB 18 and the additional DB 10X in accordance with a request from a predetermined external device, i.e., the user terminals 31 through 3N and the enterprise resource planning system 100 according to this embodiment. More specifically, the manufacture instruction data management server 10 performs a function as a core business server. In other words, the manufacture instruction data management server 10 is equipped with an ERP engine.

According to this embodiment, it is assumed that the manufacture instruction data management server 10 has a function as a DWH server performing various types of functions for realizing a data warehouse, though not shown in the figures. The constitution of the manufacture instruction data management server 10 for performing both the functions as an ERP engine and a DWH server allows the manufacture instruction data management server 10 to supply information to an enterprise resource planning system having a different constitution (for example, an enterprise resource planning system including only a core business server, and an enterprise resource planning system including only a DWH server, as well as the enterprise resource planning system 100) when the information is required by the corresponding enterprise resource planning system.

Each of the user terminals 31 through 3N is constituted by an information processing device, such as iPad (registered trademark), which includes a CPU (Central Processing Unit), a ROM, a RAM, a display unit and others,. According to this embodiment, it is assumed that each of the user terminals 31 through 3N is equipped with various types of applications used for handling web browsers, manufacture instruction data, and various types of screen information. In addition, according to this embodiment, each of the user terminals 31 through 3N has a function of defining queries (narrowing item, narrowing key, extraction key and the like) used for obtaining necessary manufacture instruction data from the manufacture instruction data management server 10 in accordance with operation input from the user, for example, and a function of transmitting the defined queries to the manufacture instruction data management server 10.

According to this embodiment, the respective user terminals 31 through 3N have output units 31a through 3Na, respectively, each of which communicates with the manufacture instruction data management server 10 via the relay 20 and the communication network 40, and outputs a screen based on screen information obtained from the manufacture instruction data management server 10 by a function of software such as a predetermined web application (web browser), for example.

Operation of the manufacture instruction data management system 1000 (hereinafter referred to as system 1000 depending on cases) is hereinafter described with reference to the drawings. Contents of operations and processes not particularly relating to the present invention may be omitted depending on cases. Discussed in this embodiment is an example in which a production table is created based on manufacture instruction data corresponding to an organization ID presented in a login request received from the user terminal 31 beforehand. In other words, a production table created for each organization will be discussed.

When such a constitution is assumed which receives narrowing conditions without receiving a login request, the user terminal 31 may be configured to receive input of an organization ID to an organization ID input area (not shown) on a narrowing screen for designating narrowing conditions, and transmit narrowing conditions containing the inputted organization ID at the time of transmission of the narrowing conditions to the server 10. In addition, the production table may be created for each corporation rather than for each organization.

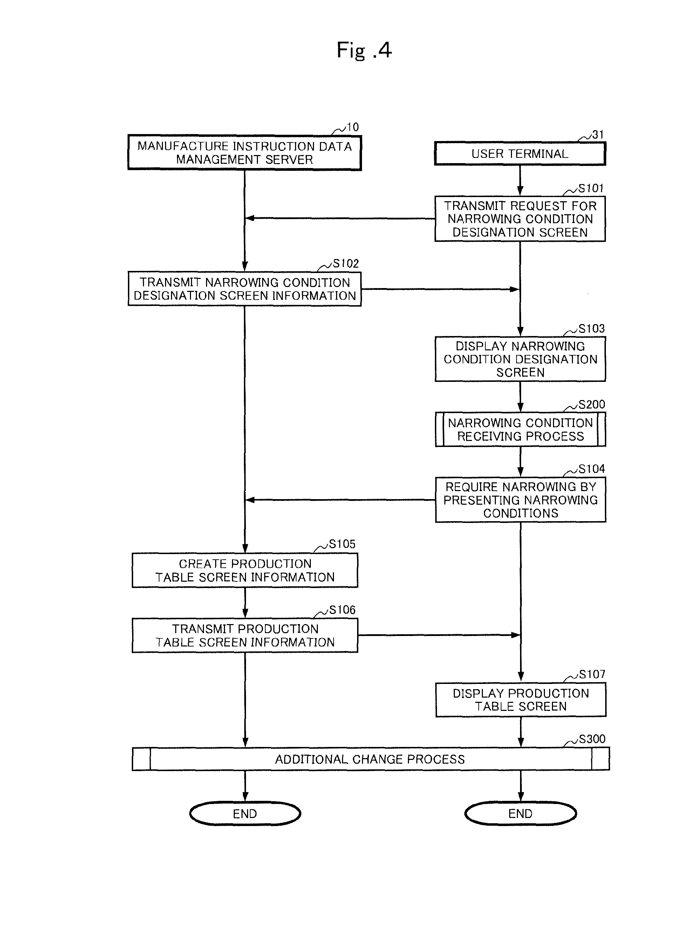

FIG. 4 is a flowchart showing an example of a production table supplying process executed by the manufacture instruction data management server 10 (hereinafter referred to as server 10 depending on cases) and others included in the manufacture instruction data management system 1000 according to this embodiment. In this process, the server 10 executes a process for receiving a request for display of data concerning manufacture instructions from the user terminal 31 presenting a specified organization ID, and a process for transmitting to the user terminal 31 information concerning a production table to be displayed on the user terminal 31 side in accordance with the received request.

In the production table supplying process, the user terminal 31 initially issues a request for transmission of a narrowing condition designation screen to the server 10 (step S101). More specifically, the user terminal 31 displays a predetermined menu screen, and receives from the user a press of a button for inputting a request for display of manufacture instructions. Then, the user terminal 31 transmits a request for transmission of the narrowing condition designation screen 500 to the server 10.

After receiving the request for transmission of the narrowing condition designation screen 500 from the user terminal 31, the server 10 transmits to the user terminal 31 narrowing condition designation screen information for displaying the narrowing condition designation screen 500 (step S102).

After receiving the narrowing condition designation screen information, the user terminal 31 displays the narrowing condition designation screen 500 on a display device included in the user terminal 31 based on the received narrowing condition designation screen information (step S103).

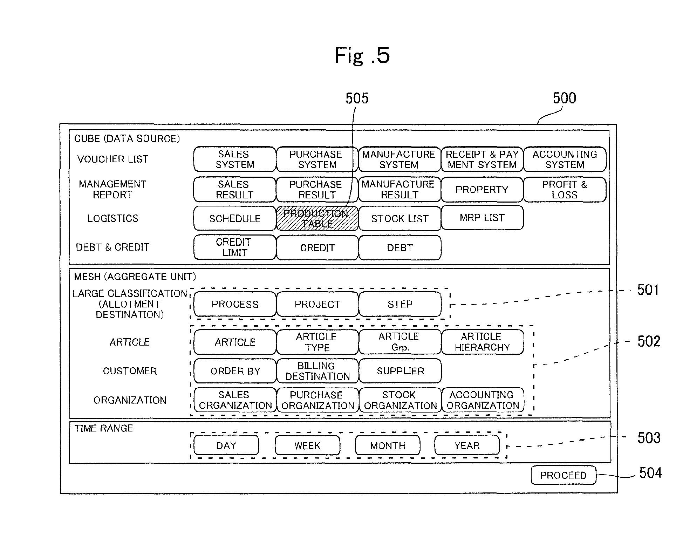

FIG. 5 is a figure illustrating a constitution example of the narrowing condition designation screen 500. As illustrated in FIG. 5, the narrowing condition designation screen 500 contains an allotment destination item selection area 501, an article item selection area 502, a time range selection area 503, a proceed button 504, and a production table button 505.

The allotment destination item selection area 501 is an area for selecting an item of allotment destination information to which manufacture instructions are allotted, such as "process" and "step". The allotment destination item selection area 501 contains a plurality of buttons representing names of the corresponding items. The allotment destination item selection area 501 is an area where the user terminal 31 receives selection of any button displayed in this area.

The article item selection area 502 is an area for selecting an item or items of article detailed information indicating detailed information about an article, and contains a plurality of buttons representing names of the corresponding items. The article item selection area 502 is an area where the user terminal 31 receives designation of one or more items.

The time range selection area 503 is an area for receiving selection of a time range, and contains buttons for corresponding time units.

According to this embodiment, the respective selection areas include allotment destinations, article details, and time ranges, respectively, as selection items for which selection from the user is received. However, the constitution of this embodiment is not limited to this example. For example, such a constitution may be adopted which includes some of selection items which are already set without the necessity of receiving selection, and the other selection items only for which reception of selection is needed so as to execute narrowing. More specifically, the system 1000 according to this embodiment may be configured to set the time range to "week" beforehand, and receive selection of only allotment destination and article details.

The proceed button 504 is a button provided to execute narrowing based on the selected items.

The production table button 505 is a button selected to display a production table. The embodiment discussed herein is an example which displays a production table based on manufacture instruction data, wherefore it is assumed that the production table button 505 has been selected beforehand. In addition, as illustrated in FIG. 5, the selected buttons are displayed with signs of emphasis to allow recognition of the state of selection at first glance.

After displaying the narrowing condition designation screen 500, the user terminal 31 executes a narrowing condition receiving process (step S200).

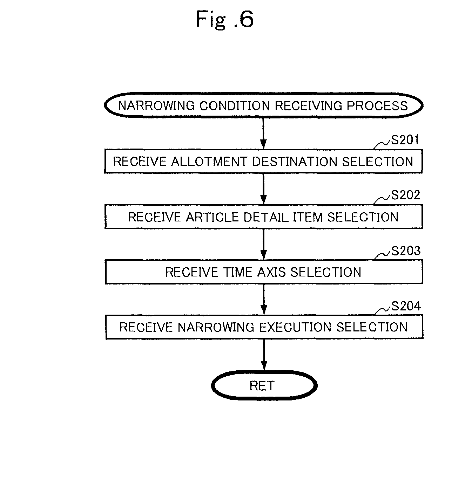

FIG. 6 is a flowchart showing an example of the narrowing condition receiving process. As illustrated in FIG. 6, the narrowing condition receiving process executes a process for receiving selection of respective items.

In the narrowing condition receiving process, the user terminal 31 initially receives selection of an allotment destination from the user (step S201).

After receiving selection of the allotment destination from the user, the user terminal 31 receives selection of an article item from the user (step S202).

After receiving selection of the article item, the user terminal 31 receives selection of a time range (step S203).

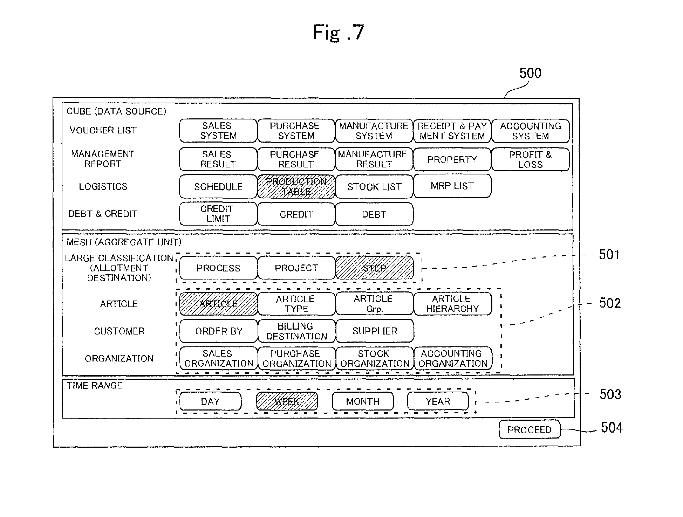

FIG. 7 is a figure illustrating a constitution example of the narrowing condition designation screen 500 updated after reception of selection of respective items. As illustrated in FIG. 7, display modes of the respective buttons indicating the selected allotment destination item in the allotment destination item selection area 501, the selected article item in the article item selection area 502, and the selected time range in the time range selection area 503 have been changed to allow recognition of the selected buttons at first glance.

According to this embodiment, selection of the respective items is determined in the order of allotment destination item, article item, and time range. However, the order of selection may be arbitrarily determined. More specifically, the article item may be selected earlier, or the time range may be selected earlier.

After receiving selection of the time range, the user terminal 31 receives selection of execution of narrowing. More specifically, the user terminal 31 receives selection of the proceed button 504 (step S204).

After receiving selection of the proceed button 504, the user terminal 31 returns to the production table supplying process. Then, the user terminal 31 presents the selected narrowing conditions and transmits a request for narrowing to the server 10 (step S104).

After receiving the request for narrowing, the server 10 creates production table screen information based on the received narrowing conditions (step S105).

After creating the production table screen information, the server 10 transmits the created production table screen information to the user terminal 31 (step S106).

After receiving the production table screen information from the server 10, the user terminal 31 displays a production table screen 800 on the display device of the user terminal 31 (step S107).

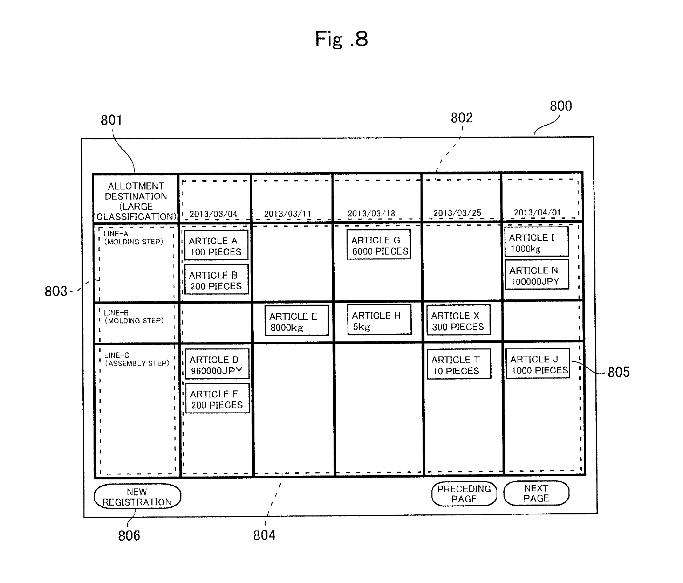

FIG. 8 is a figure illustrating a constitution example of the production table screen 800. The production table screen 800 in FIG. 8 is a specific screen where the narrowing conditions are set to "step" for the allotment destination item, "article" for the article item, and "week" for the time range in correspondence with the narrowing conditions shown in FIG. 7. As illustrated in FIG. 8, the production table screen 800 contains a production table 801, an element display area (time range element display area 802 and allotment destination element display area 803), a mesh data display area 804, mesh data 805, and a registration button 806.

The production table 801 is a table having a horizontal axis and a vertical axis for element display. According to the production table screen 800 in this embodiment, time ranges are put on the horizontal axis, while allotment destinations are put on the vertical axis. However, the elements on the horizontal axis may be switched to elements on the vertical axis, and the elements on the vertical axis may be switched to elements on the horizontal elements.

The time range element display area 802 is an area for displaying elements divided by time ranges designated as narrowing conditions. The time range designated in this embodiment is "week", wherefore time ranges divided by weeks are displayed in the time range element display area 802.

The allotment destination element display area 803 is an area for displaying elements divided by allotment destinations designated as narrowing conditions. The allotment destination designated in this embodiment is "step", wherefore steps of all types contained in the manufacture instruction data are displayed in the allotment destination element display area 803 as individual divided steps of "LINE-A (molding step)", "LINE-B (molding step)", and "LINE-C (assembly step)", and others. According to this embodiment, the steps of all types contained in the manufacture instruction data are divided into the individual steps and displayed. However, such a constitution may be adopted which divides only a part of all the steps (such as steps A through D when all the steps are constituted by steps A through F) into individual divided steps to be displayed. In this case, selection buttons are provided on the narrowing condition designation screen 500 or on the production table screen 800 to receive designation of selection from a part of the steps displayed on the allotment destination element display area 803.

According to this embodiment, a "work division name" as an item associated with a "work division" shown in FIG. 3 is displayed on the allotment destination element display area 803 together with the "work division" when the item "step" is designated. However, such a constitution which displays only either the "work division "or the "work division name" may be adopted.

The mesh data display area 804 is an area for displaying the mesh data 805 containing article detail information about the corresponding article item. Each of the mesh data 805 is put in a section for the corresponding elements as corresponding manufacture instruction data. When multiple sets of the mesh data 805 are present as data corresponding to the same elements, the user terminal 31 positions the multiple sets of the mesh data 805 within the same corresponding section.

Each of the mesh data 805 is data corresponding to an article item designated based on narrowing conditions. The mesh data 805 is extracted for display from the manufacture instruction data meeting the respective elements of the time range and allotment destination. According to this embodiment, the designated article item is "article", wherefore the "product name" and the "amount of production" associated with the "article" are displayed as the mesh data 805. According to this embodiment, items for extraction associated with the corresponding article are specified based on a not-shown associated information extraction table, and data corresponding to the items for extraction is displayed as the mesh data 805. However, the constitution of this embodiment is not limited to this example. The system 1000 may be configured to associate article items designated as narrowing conditions with item names in data to be stored with one-to-one correspondence. More specifically, the article item selection area 502 of the narrowing condition designation screen 500 may be configured to contain an item "product name" shown in FIG. 3 so that the system 1000 can extract data corresponding to the "product item" when the "product name" is selected as narrowing conditions. Alternatively, data to be displayed as the mesh data 805 may be set beforehand.

The registration button 806 is a button provided for executing an additional change process. According to this embodiment, execution of either new addition of manufacture instructions or contents change is received by selection operation of this button. However, an arbitrary constitution may be adopted as long as this process can be executed based on selection from the user.

After displaying the production table screen 800, the user terminal 31 executes the additional change process by reception of selection of the registration button 806 (step S108). When operation for ending the browser is executed without selection of the registration button 806, the production table supplying process ends without execution of the additional change process.

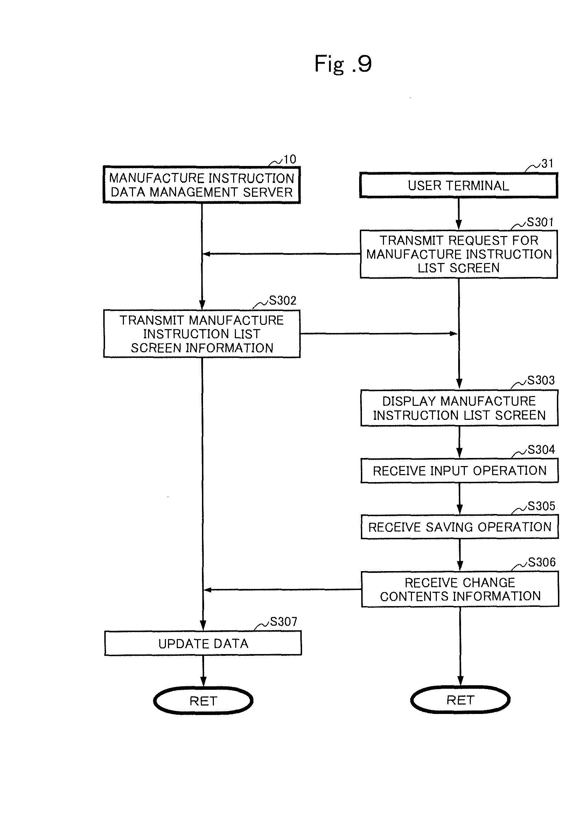

FIG. 9 is a flowchart showing an example of the additional change process. As shown in FIG. 9, either the new addition process of manufacture instructions, or the contents change process of manufacture instructions is executed in the additional change process.

In the additional change process, the user terminal 31 initially transmits a request for transmission of a manufacture instruction list display screen 1100 to the server 10 (step S301).

After receiving the request for transmission of the manufacture instruction list display screen 1100, the server 10 transmits manufacture instruction list display screen information to the user terminal 31 (step S302).

After receiving the manufacture instruction list display screen information, the user terminal 31 displays the manufacture instruction list display screen 1100 based on the received manufacture instruction list display screen information (step S303).

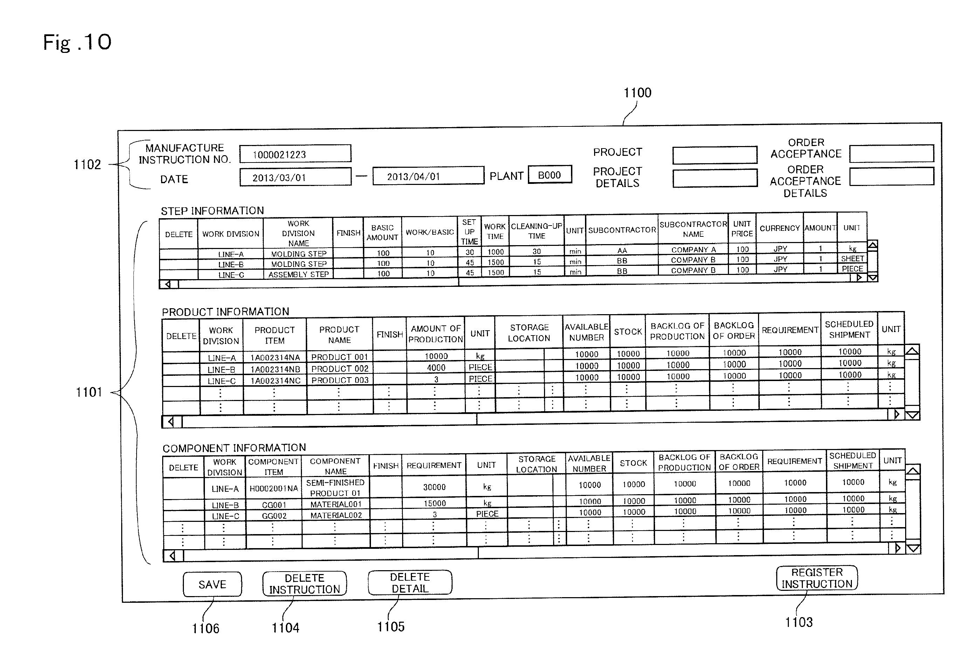

FIG. 10 is a figure illustrating a constitution example of the manufacture instruction list display screen. As illustrated in FIG. 10, the manufacture instruction list display screen 1100 contains a manufacture instruction list display area 1101, an allotment destination information display area 1102, an instruction registration button 1103, an instruction delete button 1104, a detail delete button 1105, and a saving button 1106.

The manufacture instruction list display area 1101 is an area for displaying lists of manufacture instruction data stored in the manufacture instruction data DB 16 of the server 10. The manufacture instruction list display area 1101 displays lists of step, product, and component data shown separately on different user interfaces. Data having the same work division name indicates data of the same manufacturing step. Details shown in the manufacture instruction list display area 1101 are configured to be selectable.

The allotment destination information display area 1102 is an area for displaying allotment information (such as project, start time, and end time) contained in the manufacture instructions to be displayed in the manufacture instruction list display area 1101.

The instruction registration button 1103 is a button to be selected when manufacture instructions are newly registered.

The instruction delete button 1104 is a button to be selected when manufacture instructions are deleted.

The detail delete button 1105 is a button to be selected when details in a line (or multiple lines) in the selected list are deleted.

The saving button 1106 is a button to be selected when change contents are saved. When receiving selection of the saving button 1106, the user terminal 31 transmits information indicating the change contents to the server 10.

After displaying the manufacture instruction list display screen 1100, the user terminal 31 receives input operation inputted to the manufacture instruction list display screen 1100 (step S304).

After receiving the input operation, the user terminal 31 receives selection operation for selecting the saving button 1106 (step S305).

The user terminal 31 reflects the received input contents to the manufacture instruction list screen 1100, and transmits change contents information indicating the input contents to the server 10 (step S306). Then, the terminal 31 ends the additional change process. After ending the additional change process, the user terminal 31 ends the production table supplying process.

On the other hand, the server 10 having received the change contents information updates the manufacture instruction data based on the change contents information (step S307). After updating the manufacture instruction data, the server 10 ends the production table supplying process.

As discussed above, the manufacture instruction data management server 10 (manufacture instruction data management system 1000) in the foregoing embodiment is a server for operation of ERP, and supplies manufacture instruction data produced in a business process to the user terminal 31 via a communication network in accordance with a request issued from the user terminal 31 used by the user. The manufacture instruction data management server 10 includes the manufacture instruction data DB 16 storing manufacture instruction data containing allotment destination information indicating a destination of allotment of instructions, and article detail information indicating details of an article to be manufactured, supplies the narrowing condition designation screen (500, 700) for designating a time range, an allotment destination item indicating an item of the allotment destination information, and an article item indicating an item of the article detail information as narrowing conditions in accordance with a request from the user terminal, receives narrowing conditions designated on the narrowing condition designation screen (500, 700) from the user terminal 31, creates the production table screen 800 corresponding to the narrowing conditions as narrowing result data, and supplies the created narrowing result data to the user terminal 31 as narrowing results. The production table screen 800 contains the element display area (802, 803) where a designated time range, and allotment destination information corresponding to the designated allotment destination item are displayed as elements of a table, and contains the mesh data display area 804 where the mesh data 805 containing the article detail information about the article item is displayed in a section for corresponding elements for each manufacture instruction data. This constitution allows output of desired data to the user only by simplified processing without requiring complicated selection operation in the business system (ERP system) for providing information on reports.

Particularly, this constitution allows display of details of an item desired by the user for each unit of allotment destination desired by the user (such as process, project, or step allotted), and for each unit of period desired by the user (such as week). Accordingly, this constitution displays data concerning manufacture instructions in a wide variety of manners, thereby providing a manufacture instruction data management server capable of supplying an extremely convenient display screen to be viewed by the user.

The narrowing condition designation screen (500, 700) according to the foregoing embodiment contains the area for selecting the time range, the area for selecting the allotment destination item, and the area for selecting the article item. This constitution allows selection of the respective items by simplified processing without requiring complicated selection operation.

The production table screen 800 according to the foregoing embodiment contains the additional change area (the registration button 806) for selecting execution of either new addition of the manufacture instruction data or contents change of the manufacture instruction data. The manufacture instruction data management server 10 transmits additional change screen information displaying a list of the manufacture instruction data to the user terminal in accordance with a request from the user terminal having determined selection in the additional change area, receives contents of input operation of either new addition of the manufacture instruction data or contents change of the manufacture instruction data from the user terminal displaying an additional change screen based on the additional change screen information, and updates the manufacture instruction data in accordance with the received contents of input operation. This constitution allows execution of processing for business management containing registration and updating of manufacture instructions by simplified processing.

The allotment destination item according to the foregoing embodiment contains at least any one of a business process, a project, and a step, while the article item according to the foregoing embodiment contains at least either an article name or an amount of production.

The present invention offers advantageous effects in the use of a business system (ERP system) for managing data concerning manufacture instructions.

## Claims

1. A manufacture instruction data management server which is a server for operation of ERP, and supplies manufacture instruction data produced in a business process to a user terminal via a communication network in accordance with a request issued from the user terminal used by a user, comprising:
a manufacture instruction data storing unit storing manufacture instruction data containing allotment destination information indicating a destination of allotment of instructions, and article detail information indicating details of an article to be manufactured;
a narrowing condition designation screen supplying unit supplying a narrowing condition designation screen for designating a time range, an allotment destination item indicating an item of the allotment destination information, and an article item indicating an item of the article detail information as narrowing conditions in accordance with a request from the user terminal;
a narrowing result data creating unit receiving narrowing conditions designated on the narrowing condition designation screen from the user terminal, and creating a production table screen corresponding to the narrowing conditions as narrowing result data; and
a narrowing result supplying unit supplying the narrowing result data created by the narrowing result data creating unit to the user terminal as narrowing results,
wherein the production table screen contains an element display area where a designated time range, and allotment destination information corresponding to the designated allotment destination item are displayed as elements of a table, and contains a mesh data display area where mesh data containing the article detail information about the article item is displayed in a section for corresponding elements for each manufacture instruction data.

2. The manufacture instruction data management server according to claim 1, wherein the narrowing condition designation screen contains an area for selecting the time range, an area for selecting the allotment destination item, and an area for selecting the article item.

3. The manufacture instruction data management server according to claim 1, wherein
the production table screen contains an additional change area for selecting execution of either new addition of the manufacture instruction data or contents change of the manufacture instruction data,
the manufacture instruction data management server transmits additional change screen information displaying a list of the manufacture instruction data to the user terminal in accordance with a request from the user terminal having determined selection in the additional change area,
the manufacture instruction data management server receives contents of input operation of either new addition of the manufacture instruction data or contents change of the manufacture instruction data from the user terminal displaying an additional change screen based on the additional change screen information, and
the manufacture instruction data management server updates the manufacture instruction data in accordance with the received contents of input operation.

4. The manufacture instruction data management server according to claims 1, wherein
the allotment destination item contains at least any one of a business process, a project, and a step, and
the article item contains at least either an article name or an amount of production.

5. A manufacture instruction data management program which allows operation of ERP, and allows a manufacture instruction data management server to supply manufacture instruction data produced in a business process to a user terminal via a communication network in accordance with a request issued from the user terminal used by a user, under the program the manufacture instruction data management server including a manufacture instruction data storing unit which stores manufacture instruction data containing allotment destination information indicating a destination of allotment of instructions, and article detail information indicating details of an article to be manufactured executes
a narrowing condition designation screen supplying process supplying a narrowing condition designation screen for designating a time range, an allotment destination item indicating an item of the allotment destination information, and an article item indicating an item of the article detail information as narrowing conditions in accordance with a request from the user terminal,
a narrowing result data creating process receiving narrowing conditions designated on the narrowing condition designation screen from the user terminal, and creating a production table screen corresponding to the narrowing conditions as narrowing result data, wherein the production table screen contains an element display area where a designated time range, and allotment destination information corresponding to the designated allotment destination item are displayed as elements of a table, and contains a mesh data display area where mesh data containing the article detail information about the article item is displayed in a section for corresponding elements for each manufacture instruction data, and
a narrowing result supplying process supplying the narrowing result data created in the narrowing result data creating process to the user terminal as narrowing results.
